(19) **Europäisches Patentamt / European Patent Office / Office européen des brevets**

(11) **EP 4 300 618 A1**

(12) # EUROPEAN PATENT APPLICATION
published in accordance with Art. 153(4) EPC

(43) Date of publication:
**03.01.2024 Bulletin 2024/01**

(21) Application number: **22759688.9**

(22) Date of filing: **24.02.2022**

(51) International Patent Classification (IPC):
*H01M 4/13* [(2010.01)]        *H01M 4/62* [(2006.01)]
*H01B 1/06* [(2006.01)]        *H01B 1/08* [(2006.01)]
*H01M 10/052* [(2010.01)]      *H01M 10/0562* [(2010.01)]
*H01M 10/058* [(2010.01)]      *H01M 10/0585* [(2010.01)]

(52) Cooperative Patent Classification (CPC):
**H01B 1/06; H01B 1/08; H01M 4/13; H01M 4/62;
H01M 10/052; H01M 10/0562; H01M 10/058;
H01M 10/0585**

(86) International application number:
**PCT/JP2022/007439**

(87) International publication number:
**WO 2022/181653 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021   JP 2021028807
18.06.2021   JP 2021101742
20.01.2022   JP 2022007354**

(71) Applicant: **CANON KABUSHIKI KAISHA
Tokyo 146-8501 (JP)**

(72) Inventors:
• **DOGUCHI, Kentaro**
  **Tokyo 146-8501 (JP)**
• **MASADA, Yohei**
  **Tokyo 146-8501 (JP)**
• **AOTANI, Takaharu**
  **Tokyo 146-8501 (JP)**
• **TANIUCHI, Hiroshi**
  **Tokyo 146-8501 (JP)**

(74) Representative: **TBK
Bavariaring 4-6
80336 München (DE)**

(54) **SOLID ELECTROLYTE, ACTIVE MATERIAL LAYER, ELECTROLYTE LAYER AND SECONDARY BATTERY**

(57)    A solid electrolyte contains a borate containing Li, an element R selected from a group including Yb, Er, Ho, Tm, La, Nd, and Sm, and an element M selected from a group including Zr, Ce, and Sn.

Processed by Luminess, 75001 PARIS (FR)

**(Cont. next page)**

# FIG. 7

**Description**

Technical Field

The present invention relates to a solid electrolyte and an active material layer, an electrolyte layer, and a secondary battery containing the electrolyte.

Background Art

All-solid-state secondary batteries containing solid electrolytes can have higher heat resistance and improved safety because electrolytes do not leak or volatilize. Thus, it is possible to reduce module costs and increase energy densities.

As one of such solid electrolytes, a sulfide-based solid electrolyte has been reported. However, the sulfide-based solid electrolyte has a problem in terms of workability because a sulfide is used as a raw material for their production. Thus, oxide-based solid electrolytes have been reported as non-sulfide-based solid electrolytes.

As Li-containing solid electrolytes, NASICON-type $Li_1+xAlxTi_{2-x}(PO_4)_3$ (LATP), perovskite-type $Li_{3+x}La_{2/3-x}TiO_3$ (LLT), and garnet-type cubic $Li_7La_3Zr_2O_{12}$ (LLZ) have been reported. As Na-containing solid electrolytes, $\beta''$-alumina-type $Na_2O\cdot_{(5-7)}Al_2O_3$ and NASICON-type $Na_3Zr_2Si_2PO_{12}$ have been reported. However, these solid electrolytes have the following problems: usable cathode materials are limited, and sintering at a high temperature of higher than 1,000°C is required in order to improve conductivity by bringing interfaces between solid electrolytes and between a solid electrolyte and an active material into close contact with each other. In particular, sintering at a high temperature may lead to the formation of a high-resistance phase between solid electrolytes and at the interface between a solid electrolyte and an active material, limiting the improvement of ionic conductivity.

For these reasons, attempts have recently been made to lower the sintering temperature. Japanese Patent Laid-Open No. 5-54712 discloses that the post baking temperature can be reduced to about 900°C by using a solid electrolyte containing lithium borate, such as $Li_{2+x}C_{1-x}B_xO_3$.

Japanese Patent Laid-Open No. 2013-37992 states that mixing $Li_3BO_3$ with LLZ-type oxides can reduce the sintering temperature to 650°C to 800°C when a solid electrolyte is formed.

Citation List

Patent Literature

   PTL 1: Japanese Patent Laid-Open No. 5-54712
   PTL 2: Japanese Patent Laid-Open No. 2013-37992

Summary of Invention

Technical Problem

In secondary batteries containing the respective solid electrolytes disclosed in Japanese Patent Laid-Open Nos. 5-54712 and 2013-37992, lower sintering temperatures were used, and high-resistance phases were not easily formed as intermediate layers at interfaces with other materials. However, regions occupied by the respective solid electrolytes have an ionic conductivity $\sigma_{SE}$ of lower than $1 \times 10^{-7}$ S/cm at room temperature, in some cases. There has been a demand for an oxide-based solid electrolyte having an enhanced ionic conductivity.

The present invention aims to provide a high-ionic-conductivity solid electrolyte that can be produced by sintering at a low temperature, and an electrolyte layer, an active material layer, and a secondary battery containing the solid electrolyte.

Solution to Problem

A solid electrolyte according to an embodiment of the present invention contains an oxide represented by the general formula $Li_{6-x}R_{1-x}M1_x(BO_3)_3$.

However, R is at least one or two elements selected from a group including trivalent elements Yb, Er, Ho, and Tm, M1 is a tetravalent element, and x is a real number satisfying $0 < x < 1$. A solid electrolyte according to an embodiment of the present invention contains a borate containing Li, an element R selected from a group including Yb, Er, Ho, Tm, La, Nd, and Sm, and an element M selected from a group including Zr, Ce, and Sn.

A solid electrolyte according to an embodiment of the present invention contains a borate containing Li, an element R selected from a group including Yb, Er, Ho, Tm, La, Nd, and Sm, and an element M selected from a group including Zr, Ce, and Sn, in which the solid electrolyte exhibits two diffraction peaks in a diffraction angle $2\Theta$ range of 27.4° or more and 29.0° or less in an X-ray diffraction analysis using a K-alpha emission line in copper, and a difference $2\theta d$ in diffraction angle between a higher-angle diffraction peak and a lower-angle diffraction peak is 0.43° or more.

A solid electrolyte according to an embodiment of the present invention contains an oxide represented by the general formula $Li_{6-x}R_{1-x}M_x(BO_3)_3$, where in the formula, R contains a rare-earth element selected from a group including Yb, Er, Ho, Tm, La, Nd, and Sm and is at least one or two elements, M is a tetravalent element, and x is a real number satisfying $0 < x < 1$. A solid electrolyte contains an oxide represented by the general formula $Li_{6-x}R_{1-x}M_x(BO_3)_3$, where in the formula, R is a rare-earth element selected from a group including Yb, Er, Ho, Tm, La, Nd, and Sm, M is an element selected from a group including Zr, Ce, and Sn, and x is a real number satisfying $0 < x < 1$.

Brief Description of Drawings

[Fig. 1] Fig. 1 is a graph illustrating the relationship between the ionic conductivity and the value of the composition x (x1 + x2) of a substitution element M of each of solid electrolytes according to Examples 1 to 12 included in a first embodiment.
[Fig. 2] Fig. 2 illustrates diffraction curves of fixed electrolytes according to Examples 1 to 12.
[Fig. 3] Fig. 3 illustrates diffraction curves of the fixed electrolytes according to Examples 1 to 6.
[Fig. 4] Fig. 4 illustrates the diffraction curves of the fixed electrolytes according to Examples 7 to 10.
[Fig. 5A] Fig. 5A is a schematic cross-sectional view of a secondary battery according to a second embodiment.
[Fig. 5B] Fig. 5B is a partially enlarged view of an anode and an electrolyte layer according to the second embodiment.
[Fig. 6A] Fig. 6A is a graph illustrating the relationship between the ionic conductivity and the value of the composition x (x1 + x2) of a substitution element M of each of solid electrolytes according to Examples 13 to 33 included in the first embodiment.
[Fig. 6B] Fig. 6B is a graph illustrating the relationship between the ionic conductivity and the value of the composition x (x1 + x2) of the substitution element M of each of the solid electrolytes according to Examples 1 to 12 included in the first embodiment.
[Fig. 7] Fig. 7 is a graph illustrating the relationship between the ionic conductivity of the solid electrolytes according to Examples 1 to 33 included in the first embodiment, Comparative examples 1 to 5, and Reference examples 1 to 3 and the value of the composition x (x1 + x2) of the substitution element M.

Description of Embodiments

Preferred embodiments of the present invention are described in detail below with reference to the drawings.

(First Embodiment)

A solid electrolyte according to the present embodiment contains an oxide represented by the general formula $Li_{6-x}R_{1-x}M1_x(BO_3)_3$.

In the formula, R is at least one or two elements selected from a group including trivalent elements Yb, Er, Ho, and Tm, and M1 is a tetravalent element. In the formula, x is a real number satisfying $0 < x < 1$.

In the formula, when R contains at least two elements selected from the group including the trivalent elements Yb, Er, Ho, and Tm, a combination of the elements selected from the group including Yb, Er, Ho, and Tm may be used, and a combination with another trivalent element having an ionic radius close to these elements may also be used.

In other words, the solid electrolyte according to the present embodiment contains an oxide represented by the general formula $Li_{6-x}R_{1-x}M_x(BO_3)_3$.

In the formula, R is at least one or two rare-earth elements selected from a group including Yb, Er, Ho, Tm, La, Nd, and Sm, and M is an element selected from a group including Zr, Ce, and Sn. In the formula, x is a real number satisfying $0 < x < 1$.

In the formula, when R contains at least two elements selected from the group including rare-earth elements Yb, Er, Ho, Tm, La, Nd, and Sm, a combination of the rare-earth elements in the group may be used, and a combination with another rare-earth element having an ionic radius close to these elements may also be used.

A possible reason for improved ionic conductivities of the solid electrolytes containing the oxides represented by the above general formula will be described below.

When the rare-earth elements Yb, Er, Ho, Tm, La, Nd, and Sm are partially replaced with a tetravalent element M, the charge balance is adjusted in such a manner that the crystal as a whole is neutral, thereby producing a state deficient in $Li^+$ in the crystal lattice. A portion lacking an element is generally referred to as a vacancy. A phenomenon in which $Li^+$ around the vacancy moves to the vacancy, which is generally called hopping, occurs in a concerted manner, thereby improving the ionic conductivity.

In other words, the solid electrolyte of the present embodiment is a solid electrolyte containing a borate that contains Li, an element R selected from a group including Yb, Er, Ho, Tm, La, Nd, and Sm, and an element M selected from a group including Zr, Ce, and Sn.

The solid electrolyte of the present embodiment preferably has a monoclinic crystal structure.

In an X-ray diffraction analysis (hereinafter, referred to as "XRD") using a K-alpha emission line in copper, a diffraction peak at a diffraction angle $2\Theta$ of about 28° changes in accordance with the composition of the solid electrolyte.

The solid electrolyte of the present embodiment in which R in the oxide represented by the general formula $Li_{6-x}R_{1-x}M_x(BO_3)_3$ is Yb preferably exhibits a diffraction peak in the range of $2\Theta = 28.07°$ or more and 28.20° or less in XRD using the K-alpha emission line in copper. More preferably, the solid electrolyte has a peak in the range of $2\Theta = 28.10°$ or more and 28.20° or less.

The solid electrolyte of the present embodiment in which R in the oxide represented by the general formula $Li_{6-x}R_{1-x}M_x(BO_3)_3$ is Er preferably exhibits a diffraction peak in the range of $2\Theta = 27.94°$ or more and 28.10° or less in XRD using the K-alpha emission line in copper. More preferably, the solid electrolyte has a peak in the range of $2\Theta = 28.0°$ or more and 28.20° or less.

In XRD using the K-alpha emission line in copper, the position of a diffraction peak at about $2\Theta = 28°$ can be controlled by adjusting the value of x in the general formula and changing the element represented by M.

M in the above general formula is a tetravalent element. M is at least one element selected from a group including Zr, Ce, and Sn.

As elements substituted for Yb, Er, Ho, Tm, La, Nd, and Sm, which are trivalent elements R, elements having similar ionic radii are easily substituted therefor. Specific examples thereof include $Zr^{4+}$, $Ce^{4+}$, $Sn^{4+}$, $Ti^{4+}$, $Nb^{4+}$, $Pb^{4+}$, $Pr^{4+}$, and $Nb^{5+}$ as candidates. Among them, $Zr^{4+}$ and $Ce^{4+}$ are more easily substituted.

In the above general formula, x is a real number satisfying $0 < x < 1$. As x corresponding to the amount of substitution element M substituted for the element R, a value of 0.025 or more and 0.600 or less is used. More preferably, a value of 0.075 or more and 0.400 or less is used.

The reasons why the above range of x is preferred are inferred as follows: When the value of x is less than 0.025, a sufficient structural change does not occur because of a small amount of element R replaced, and paths through which ions pass are not sufficiently formed, thereby resulting in no improvement in ionic conductivity. When the value of x is more than 0.4, the amount of substitution element M is too large. Thus, the excess element M, which does not contribute to substitution for the element R in the crystal, contributes as an inhibition component for ionic conduction rather than the substitution effect in the crystal.

A method for producing the solid electrolyte of the present embodiment will be described below.

The method for producing a solid electrolyte of the present embodiment includes a post baking step of heating Li, R, and M, which are elements constituting a solid electrolyte containing an oxide represented by the general formula $Li_{6-x}R_{1-x}M_x(BO_3)_3$, or oxides thereof in an oxygen-containing atmosphere (where in the formula, R is at least one or two elements selected from a group including rare-earth elements Yb, Er, Ho, Tm, La, Nd, and Sm, and M is a tetravalent element).

The method for producing a solid electrolyte of the present embodiment includes a prebaking step of performing heat treatment at a temperature lower than the melting point of the oxides to perform solid-phase synthesis of the oxide represented by the above general formula, and a step of densifying the resulting oxide by heat treatment.

While the method, including the prebaking step and the post baking, for producing a solid electrolyte of the present embodiment will be described in detail below, the present invention is not limited to the following production method.

<Prebaking Step>

In the prebaking step, reagent-grade raw materials, such as $Li_3BO_3$, $H_3BO_3$, $Yb_2O_3$, $Er_2O_3$, $Ho_2O_3$, $Tm_2O_3$, $ZrO_2$, and $CeO_2$, are weighed with reference to a predetermined stoichiometric ratio as an index and mixed together to form $Li_{6-x}R_{1-x}M_x(BO_3)_3$. Other raw materials to be weighed so as to achieve a predetermined stoichiometric ratio include $SnO_2$, $Nb_2O_3$, $La_2O_3$, $Nd_2O_3$, and $Sm_2O_3$. Here, R is at least one or two elements selected from a group including rare-earth elements Yb, Er, Ho, Tm, La, Nd, and Sm. As M, a tetravalent element is used.

As a device used for mixing, a mixer such as a ball mill can be used, in addition to a mortar and pestle.

After a mixed powder of the above raw materials is prepared by the mixing treatment, the resulting mixed powder is pressure-molded into pellets. Here, as the pressure-molding method, a known pressure-molding method, such as a cold uniaxial molding method or a cold isostatic pressure molding method, can be used. As the conditions for pressure molding in the prebaking step, the pressure can be, but is not particularly limited to, 100 to 300 MPa, for example.

The resulting pellets are prebaked at 500°C to 800°C with, for example, an atmospheric post baking apparatus to perform solid-phase synthesis. The time of the prebaking step can be, but is not particularly limited to, for example, about 700 to 750 minutes (such as, 720 minutes).

The resulting prebaked body is the oxide represented by the general formula $Li_{6-x}R_{1-x}M_x(BO_3)_3$. The prebaked body can be ground with, for example, a mortar and pestle, to prepare a prebaked powder.

<Post Baking Step>

In the post baking step, at least one selected from a group including the prebaked body prepared in the prebaking step and the prebaked body is subjected to pressure molding and post baking to prepare a dense sintered body.

The pressure molding and the post baking may be performed simultaneously by, for example, discharge plasma sintering or hot pressing. Alternatively, after pellets are produced by cold uniaxial molding, post baking may be performed in an air atmosphere, for example. As the conditions for pressure molding in the post baking step, the pressure can be, but is not particularly limited to, 100 to 300 MPa, for example.

The post baking temperature is preferably 800°C or lower, more preferably 700°C or lower, still more preferably 680°C or lower.

The time of the post baking step can be appropriately changed in accordance with, for example, the temperature of the post baking, and can be, for example, about 700 to 750 minutes (such as 720 minutes).

The cooling method in the post baking step is not particularly limited. Natural cooling may be used. Cooling slower than natural cooling may also be used.

A secondary battery of the present embodiment will be described below.

A typical secondary battery includes an anode containing an anode active material, a cathode containing a cathode active material, an electrolyte containing a solid electrolyte disposed between the anode and the cathode, and if necessary, a current collector.

The secondary battery of the present embodiment is a secondary battery including at least an anode containing an anode active material, a cathode containing a cathode active material, and an electrolyte, and at least one selected from a group including the anode, the cathode, and the electrolyte contains the solid electrolyte of the present embodiment.

In the secondary battery of the present embodiment, the electrolyte may contain the solid electrolyte of the present embodiment, or may contain another solid electrolyte. Examples of another solid electrolyte that may be contained include, but are not particularly limited to, $Li_3PO_4$, $Li_7La_3Zr_2O_{12}$, $Li_{0.33}La_{0.55}TiO_3$, and $Li_{1.5}Al_{0.5}Ge_{1.5}(PO_4)_3$. The solid electrolyte of the present embodiment is preferably contained in the electrolyte of the secondary battery of the present embodiment in an amount of 25% or more by mass, more preferably 50% or more by mass, still more preferably 75% or more by mass, particularly preferably 100% by mass.

The secondary battery of the present embodiment can be produced by a known method, for example, by lamination of an anode, a solid electrolyte, and a cathode, shaping, and heat treatment. The solid electrolyte of the present embodiment can be produced by heat treatment at a lower temperature than in the conventional technique, thereby reducing the formation of a high-resistance phase caused by the reaction between the solid electrolyte and the electrode active material. This can result in a secondary battery having excellent output characteristics. The "solid" used in the present specification includes an object having self-supporting properties to the extent that a certain shape and volume are maintained even if the posture of the object is changed. In other words, the object is not flowable and has a viscosity of less than $1 \times 10^7$ cP (less than $1 \times 10^4$ Pa·s).

A method for measuring physical properties according to the present disclosure will be described below.

· Identification of R and M

When the collected sample is not a mixture with other materials, after the collected sample is treated into a solution, the composition ratio of the sample can be identified by, for example, inductively coupled highfrequency plasma atomic emission spectroscopy (ICP-AES) or wavelength dispersive X-ray fluorescence spectrometry (WDXRF). WDXRF may also be referred to as WDX.

When there is a high probability that the collected sample is a mixture, a scanning analyzer that can provide elemental mapping images, such as an X-ray photoelectron spectrometer (XPS, ESCA) or a scanning electron microscope equipped with an energy dispersive X-ray fluorescence analyzer (EDXRF), can be used. Hereinafter, the scanning electron microscope equipped with the energy dispersive X-ray fluorescence spectrometer (EDXRF) may be abbreviated as SEM/EDX. When there is a high probability that the collected sample is a mixture, the crystal structure may be identified using a transmission electron microscope equipped with an electron beam diffraction function (TEM-ED). EDXRF may also be referred to as EDX.

ICP-AES and XPS are used in order to precisely determine the composition ratio of Li, which is a light element, to other elements with higher atomic numbers, such as B, O, Zr, and rare-earth elements.

When the collected sample is a mixture, pretreatment is used to selectively remove a non-target portion for analysis by a physical removal process, such as dicing or ion beam processing, chemical removal, such as dry etching or wet etching, or a combination thereof. For the pretreatment, washing, degreasing, sectioning, grinding, pelletizing, or the like may be used.

With regard to a standard sample, S-4800 available from Hitachi High-Technologies Corporation can be used as an analyzer for SEM/EDX.

· Measurement of X-Ray Diffraction Peak

RINT-2100 available from Rigaku Corporation is used for X-ray diffraction analysis of solid electrolytes.

A powder prepared by grinding a solid electrolyte with a mortar and pestle is subjected to X-ray diffraction analysis using characteristic X-rays of CuKα. The temperature is room temperature, the analysis range is 10° to 70°, the step is 0.016°, and the scan speed is 0.5 steps/second.

(Second Embodiment)

<Structure of Secondary Battery and Anode>

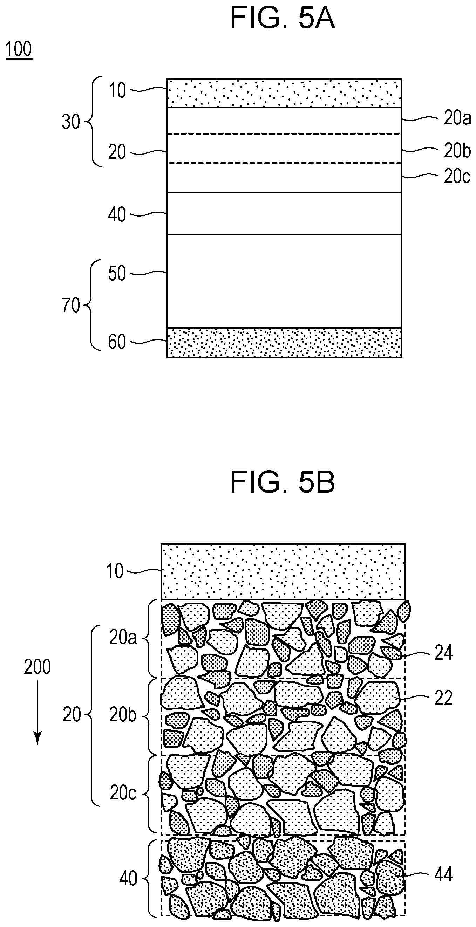

An electrolyte layer 40 containing a solid electrolyte 44 according to the first embodiment and a secondary battery 100 including the electrolyte layer 40 will be described with reference to Figs. 5A and 5B.

Fig. 5A is a schematic cross-sectional view of the secondary battery 100 including the electrolyte layer 40 in which the solid electrolyte 44 of the present embodiment is used. The secondary battery 100 includes the electrolyte layer 40 on a surface of an anode active material layer 20 opposite the side on which an anode current collector layer 10 is in contact with the anode active material layer 20. The secondary battery 100 includes a cathode 70 on a side of the electrolyte layer 40 opposite the side on which the electrolyte layer 40 is in contact with the anode active material layer 20. The cathode 70 includes a cathode active material layer 50 on a surface of the electrolyte layer 40 opposite the surface in contact with the anode active material layer 20. The cathode 70 includes a cathode current collector layer 60 on a surface of the cathode active material layer 50 opposite the surface in contact with the electrolyte layer 40. In other words, the secondary battery 100 includes, in a lamination direction 200, the cathode 70, the electrolyte layer 40, and an anode 30.

As illustrated in Fig. 5B, the electrolyte layer 40 in which an electrolyte 44 of the present embodiment is used is in contact with the anode 30 including the anode current collector layer 10 and the anode active material layer 20 that contains active material particles 22 and an anode electrolyte 24. In the present specification, a structure configured to accept or release lithium ions (active material ions) to or from the electrolyte layer 40 is referred to as an anode; thus, the anode active material layer 20, which is a portion of the anode 30 excluding the anode current collector layer 10, may also be referred to as the anode 20, as illustrated in Fig. 5A. The anode active material layer 20 of the present embodiment includes the anode electrolyte 24 and thus may be referred to as a composite anode active material layer 20 or a composite anode structure 20.

The current collector layer 10 is a conductor that conducts electrons to or from an external circuit (not illustrated) and the active material layer. As the current collector layer 10, a self-supporting film of a metal, such as stainless steel (SUS) or aluminum, or a laminated structure of metal foil and a resin base is used.

The anode active material layer 20 includes anode active material layers 20a, 20b, and 20c as sublayers. The anode active material layers 20a, 20b, and 20c are distinguished by the unit of lamination in the layer thickness direction 200 before the active material particles 22 and the anode electrolyte 24 are sintered. The anode active material layers 20a, 20b, and 20c may have distributions in the layer thickness direction in terms of the volume fractions of the active material particles 22 and the anode electrolyte 24, a conductive assistant (not illustrated), and voidage (porosity). The layer thickness direction 200 is parallel or anti-parallel to the lamination direction in which the layers are laminated, and thus may also be referred to as the lamination direction 200.

The solid electrolyte 44 according to the present embodiment is used to the anode electrolyte 24 in the composite anode active material layer 20. The anode electrolyte 24 and the solid electrolyte 44 in the electrolyte layer 40 may have the same composition and particle size distribution, or may have different compositions and particle size distributions.

(Cathode)

As a method for producing the cathode, a known method can be used. As in the second embodiment of the present application, the method for producing the anode 30 in the first embodiment may be used to the formation of the cathode with the necessary changes. Similarly to the anode 30, the cathode may have a structure in which both the cathode active material and the solid electrolyte are contained in the layer, or may be formed of a film composed of a metal, such as metal Li or In-Li.

[Cathode Active Material]

Examples of the cathode active material include metals, metal fibers, carbon materials, oxides, nitrides, silicon, silicon compounds, tin, tin compounds, and various alloy materials. Among these, metals, oxides, carbon materials, silicon, silicon compounds, tin, tin compounds, and the like are preferred from the viewpoint of capacity density. Examples of metals include metal Li and In-Li. Examples of oxides include $Li_4Ti_5O_{12}$ (lithium titanate: LTO). Examples of carbon materials include various natural graphites (graphites), coke, graphitizable carbon material undergoing graphitization, carbon fibers, spherical carbon, various artificial graphites, and amorphous carbon. Examples of silicon compounds include silicon-containing alloys, silicon-containing inorganic compounds, silicon-containing organic compounds, and solid solutions. Examples of tin compounds include $SnO_b$ (0 < b < 2), $SnO_2$, $SnSiO_3$, $Ni_2Sn_4$, and $Mg_2Sn$. The cathode material may contain a conductive assistant. Examples of the conductive assistant include graphites, such as natural graphite and artificial graphite, and carbon blacks, such as acetylene black, ketjen black, channel black, furnace black, lamp black, and thermal black. Further examples of the conductive assistant include conductive fibers, such as carbon fibers, carbon nanotubes, and metal fibers, carbon fluoride, metal powders, such as aluminum, conductive metal oxides, such as conductive whiskers, e.g., zinc oxide, and titanium oxide, and organic conductive materials, such as phenylene-based dielectrics.

EXAMPLES

An example of producing and evaluating a solid electrolyte of the present embodiment as a sintered body will be described. The present disclosure is not limited to the following examples.

[Example 1]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.975}Yb_{0.975}Zr_{0.025}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 1. The heating temperature was 670°C, and the holding time was 720 minutes.

[Examples 2 to 4]

<Prebaking Step>

Prebaked bodies and prebaked powders were produced in the same process as in Example 1, except that the raw materials described in Example 1 were weighed in predetermined stoichiometric ratios in such a manner that x had values given in Table 1.

<Post Baking Step>

The prebaked powders prepared as described above were subjected to the same post baking step as in Example 1 to produce sintered bodies.

[Example 5]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for a solid electrolyte. A prebaked body and a prebaked powder were prepared in the same process as in Example 1, except that weighing was performed in a predetermined stoichiometric ratio such that the composition after sintering was $Li_{5.875}Yb_{0.875}Zr_{0.100}Ce_{0.025}(BO_3)_3$.

<Post Baking Step>

The prebaked powder prepared as described above was subjected to the same post baking step as in Example 1 to produce a sintered body. The heating temperature was 650°C, and the holding time was 720 minutes.

[Example 6]

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for a solid electrolyte. A prebaked body and a prebaked powder were prepared in the same process as in Example 1, except that weighing was performed in a predetermined stoichiometric ratio such that the composition after sintering was $Li_{5.850}Yb_{0.850}Zr_{0.100}Ce_{0.050}(BO_3)_3$.

<Post Baking Step>

The prebaked powder prepared as described above was subjected to the same post baking step as in Example 1 to produce a sintered body. The heating temperature was 670°C, and the holding time was 720 minutes.

[Example 7]

<Prebaking Step>

$Li_3BO_3$ (available from Toshima Manufacturing Co., Ltd.), $H_3BO_3$ (available from Kishida Chemical Co., Ltd.), $Er_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.975}Er_{0.975}Zr_{0.025}(BO_3)_3$, and mixed with a mortar and pestle.
After that, the mixed powder was subjected to cold uniaxial molding using a hydraulic press SSP-10A available from Shimadzu Corporation and heat treatment in an air atmosphere. The heating temperature was 650°C, and the holding time was 720 minutes.
The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 7. The heating temperature was 670°C, and the holding time was 720 minutes.

[Examples 8 to 10]

<Prebaking Step>

Prebaked bodies and prebaked powders were produced in the same process as in Example 7, except that the raw materials described in Example 7 were weighed in predetermined stoichiometric ratios in such a manner that x had values given in Table 1.

<Post Baking Step>

The prebaked powders prepared as described above were subjected to the same post baking step as in Example 1 to produce sintered bodies.

[Example 11]

<Prebaking Step>

$Li_3BO_3$ (available from Toshima Manufacturing Co., Ltd.), $H_3BO_3$ (available from Kishida Chemical Co., Ltd.), $Ho_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Ho_{0.900}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 11. The heating temperature was 650°C, and the holding time was 720 minutes.

[Example 12]

<Prebaking Step>

$Li_3BO_3$ (available from Toshima Manufacturing Co., Ltd.), $H_3BO_3$ (available from Kishida Chemical Co., Ltd.), $Tm_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Tm_{0.900}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 12. The heating temperature was 670°C, and the holding time was 720 minutes.

[Comparative Example 1]

<Prebaking Step>

$Li_3BO_3$ (available from Toshima Manufacturing Co., Ltd.), $H_3BO_3$ (available from Kishida Chemical Co., Ltd.), and $Yb_2O_3$ (available from Kojundo Chemical Laboratory Co., Ltd.) were provided as raw materials for a solid electrolyte. A prebaked body and a prebaked powder were prepared in the same process as in Example 1, except that weighing was performed in a predetermined stoichiometric ratio such that the composition after sintering was $Li_6Yb(BO_3)_3$.

<Post Baking Step>

The prebaked powder prepared as described above was subjected to the same post baking step as in Example 1 to produce a sintered body. The heating temperature was 670°C, and the holding time was 720 minutes.

[Comparative Example 2]

<Prebaking Step>

$Li_3BO_3$ (available from Toshima Manufacturing Co., Ltd.), $H_3BO_3$ (available from Kishida Chemical Co., Ltd.), and $Er_2O_3$ (available from Kojundo Chemical Laboratory Co., Ltd.) were provided as raw materials for a solid electrolyte. A prebaked body and a prebaked powder were prepared in the same process as in Example 1, except that weighing was performed in a predetermined stoichiometric ratio such that the composition after sintering was $Li_6Er(BO_3)_3$.

<Post Baking Step>

The prebaked powder prepared as described above was subjected to the same post baking step as in Example 1 to produce a sintered body. The heating temperature was 670°C, and the holding time was 720 minutes.

[Reference Example 1]

<Prebaking Step>

$Li_3BO_3$ (available from Toshima Manufacturing Co., Ltd.), $H_3BO_3$ (available from Kishida Chemical Co., Ltd.), $Nd_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Nd_{0.900}Zr_{0.100}(BO_3)_3$, and mixed with a mortar and pestle.
After that, the mixed powder was subjected to cold uniaxial molding using a hydraulic press SSP-10A available from Shimadzu Corporation and heat treatment in an air atmosphere. The heating temperature was 650°C, and the holding time was 720 minutes.
The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Reference example 1. The heating temperature was 650°C, and the holding time was 720 minutes.

[Reference Example 2]

<Prebaking Step>

$Li_3BO_3$ (available from Toshima Manufacturing Co., Ltd.), $H_3BO_3$ (available from Kishida Chemical Co., Ltd.), $Sm_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Sm_{0.900}Zr_{0.100}(BO_3)_3$, and mixed with a mortar and pestle.
After that, the mixed powder was subjected to cold uniaxial molding using a hydraulic press SSP-10A available from Shimadzu Corporation and heat treatment in an air atmosphere. The heating temperature was 650°C, and the holding time was 720 minutes.
The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Reference example 2. The heating temperature was 650°C, and the holding time was 720 minutes.
The sintered bodies of Examples 1 to 12, Comparative examples 1 and 2, and Reference examples 1 and 2 were subjected to composition analysis and measurement of X-ray diffraction peaks by the above-described methods. The ionic conductivity was measured by the following method. A method for measuring the ionic conductivity is described below. Table 1 presents the obtained evaluation results.

· Measurement of Ionic Conductivity

Gold electrodes were deposited on the top and bottom surfaces of each flat sintered body obtained by the post baking step using a magnetron sputtering system MSP-10, available from Vacuum Device Co., Ltd., to produce a sample for AC impedance measurement.

A Potentiostat/Galvanostat SI 1287A and a Frequency Response Analyzer 1255b available from Solartron Analytical were used for the AC impedance measurement. The measurement conditions were room temperature and a frequency of 1 MHz to 0.1 Hz.

The resistance of the sintered body was calculated from the complex impedance plot obtained by the impedance measurement. From the calculated resistance, the thickness of the sintered body, and the electrode area, the ionic conductivity was determined using the following equation.

$$\text{Ionic conductivity (S/cm)} = \text{thickness of sintered body (cm)} / (\text{resistance of sintered body } (\Omega) \times \text{electrode area (cm}^2))$$

[Examples 13 and 14]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Tm_2O_3$ (available from Kojundo Chemical Laboratory Co., Ltd.), and $ZrO_2$ (available from Nippon Denko Co., Ltd.) were provided as raw materials for solid electrolytes. They were weighed in predetermined stoichiometric ratios such that the compositions after sintering were $Li_{5.900}Yb_{0.720}Tm_{0.180}Zr_{0.100}(BO_3)_3$ and $Li_{5.800}Yb_{0.640}Tm_{0.160}Zr_{0.200}(BO_3)_3$, and mixed with a mortar and pestle.

After that, the mixed powders were subjected to cold uniaxial molding using a hydraulic press SSP-10A available from Shimadzu Corporation and heat treatment in an air atmosphere. The heating temperature was 650°C, and the holding time was 720 minutes.

The resulting prebaked bodies were ground with a mortar and pestle to prepare prebaked powders.

<Post Baking Step>

The prebaked powders prepared as described above were molded and heat-treated in the same manner as the prebaking, thereby producing sintered bodies of Examples 13 and 14. The heating temperature was 670°C, and the holding time was 720 minutes.

[Example 15]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Tm_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for a solid electrolyte. They were weighed in a predetermined stoichiometric ratio such that the composition after sintering was $Li_{5.875}Yb_{0.700}Tm_{0.175}Zr_{0.100}Ce_{0.025}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 15. The heating temperature was 670°C, and the holding time was 720 minutes.

[Examples 16 and 17]

<Prebaking Step>

Prebaked bodies and prebaked powders were produced in the same process as in Example 15, except that the raw materials described in Example 15 were weighed in predetermined stoichiometric ratios such that R1, R2, R1 ratios, R2 ratios, M1 components, and x = x1 + x2 had values given in Table 2.

<Post Baking Step>

The prebaked powders prepared as described above were subjected to the same post baking step as in Example 15 to produce sintered bodies.

[Example 18]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Nd_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Yb_{0.720}Nd_{0.180}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 18. The heating temperature was 670°C, and the holding time was 720 minutes.

[Examples 19 to 21]

<Prebaking Step>

Prebaked bodies and prebaked powders were produced in the same process as in Example 18, except that the raw materials described in Example 18 were weighed in predetermined stoichiometric ratios such that R1, R2, R1 ratios, R2 ratios, M1 components, and x = x1 + x2 had values given in Table 2.

<Post Baking Step>

The prebaked powders prepared as described above were subjected to the same post baking step as in Example 18 to produce sintered bodies.

[Examples 22 and 23]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Nd_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for solid electrolytes. They were weighed in predetermined stoichiometric ratios such that the compositions after sintering were $Li_{5.375}Yb_{0.788}Nd_{0.088}Zr_{0.100}Ce_{0.025}(BO_3)_3$ and $Li_{5.875}Yb_{0.700}Nd_{0.175}Zr_{0.100}Ce_{0.025}(BO_3)_3$. The weighed raw materials were mixed and stirred with a mortar and pestle.

After that, the mixed powders were subjected to cold uniaxial molding using a hydraulic press SSP-10A available from Shimadzu Corporation and heat treatment in an air atmosphere. The heating temperature was 650°C, and the holding time was 720 minutes.

The resulting prebaked bodies were ground with a mortar and pestle to prepare prebaked powders.

<Post Baking Step>

The prebaked powders prepared as described above were molded and heat-treated in the same manner as the prebaking, thereby producing sintered bodies of Examples 22 and 23. The heating temperature was 670°C, and the holding time was 720 minutes.

[Example 24]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Er_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.800}Yb_{0.640}Er_{0.160}Zr_{0.200}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 24. The heating temperature was 670°C, and the holding time was 720 minutes.

[Example 25]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Sm_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Yb_{0.810}Sm_{0.090}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 25. The heating temperature was 670°C, and the holding time was 720 minutes.

[Example 26]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $La_2O_3$ (available from Kojundo Chemical Laboratory Co., Ltd.), and $ZrO_2$ (available from Nippon Denko Co., Ltd.) were provided as raw materials for a solid electrolyte. They were weighed in a predetermined stoichiometric ratio such that the composition after sintering was $Li_{5.900}Yb_{0.810}La_{0.090}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 26. The heating temperature was 670°C, and the holding time was 720 minutes.

[Example 27]

<Prebaking Step>

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $La_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for solid electrolytes. They were weighed in a predetermined stoichiometric ratio such that the composition after sintering was $Li_{5.88}Yb_{0.788}La_{0.088}Zr_{0.100}Ce_{0.025}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 27. The heating temperature was 670°C, and the holding time was 720 minutes.

[Examples 28 and 29]

<Prebaking Step>

Prebaked bodies and prebaked powders were produced in the same process as in Example 27, except that the raw materials described in Example 27 were weighed in predetermined stoichiometric ratios such that R1, R2, R1 ratios, R2 ratios, the M1 components, and x = x1 + x2 had values given in Table 2.

<Post Baking Step>

The prebaked powders prepared as described above were subjected to the same post baking step as in Example 27 to produce sintered bodies.

[Comparative Examples 3 to 5]

$Li_3BO_3$ (available from Toshima Manufacturing Co., Ltd.), $H_3BO_3$ (available from Kishida Chemical Co., Ltd.), $Yb_2O_3$ (available from Kojundo Chemical Laboratory Co., Ltd.), $Tm_2O_3$ (available from Kojundo Chemical Laboratory Co., Ltd.), $Nd_2O_3$ (available from Kojundo Chemical Laboratory Co., Ltd.), and $La_2O_3$ (available from Kojundo Chemical Laboratory Co., Ltd.), were provided as raw materials for a solid electrolyte.

<Prebaking Step>

Prebaked bodies and prebaked powders were produced in the same process as in Example 13, except that the raw materials described in Example 13 were weighed in predetermined stoichiometric ratios such that R1, R2, R1 ratios, R2 ratios, M1 components, and x = x1 + x2 had values given in Table 2.

<Post Baking Step>

The prebaked powders prepared as described above were subjected to the same post baking step as in Example 13 to produce sintered bodies.

[Example 30]

<Prebaking Step>

$Li_3BO_3$ (available from Toshima Manufacturing Co., Ltd.), $H_3BO_3$ (available from Kishida Chemical Co., Ltd.), $Er_2O_3$ (available from Kojundo Chemical Laboratory Co., Ltd.), $La_2O_3$ (available from Kojundo Chemical Laboratory Co., Ltd.), $ZrO_2$ (available from Nippon Denko Co., Ltd.), and $CeO_2$ (available from Iwatani Corporation) were provided as raw materials for solid electrolytes. They were weighed in a predetermined stoichiometric ratio such that the composition after sintering was $Li_{5.9}Er_{0.81}La_{0.090}Zr_{0.100}(BO_3)_3$, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step>

The prebaked powder prepared as described above was molded and heat-treated in the same manner as the prebaking, thereby producing a sintered body of Example 30. The heating temperature was 670°C, and the holding time was 720 minutes.

[Examples 31 to 33]

<Prebaking Step>

Prebaked bodies and prebaked powders were produced in the same process as in Example 1, except that the raw materials described in Example 1 were weighed in predetermined stoichiometric ratios such that x had values given in Table 2.

<Post Baking Step>

The prebaked powders prepared as described above were subjected to the same post baking step as in Example 1 to produce sintered bodies.

[Reference Example 3]

<Prebaking Step>

A prebaked body and a prebaked powder were produced in the same process as in Example 1, except that the raw materials described in Example 1 were weighed in a predetermined stoichiometric ratio such that x had the value given in Table 2.

<Post Baking Step>

The prebaked powder prepared as described above was subjected to the same post baking step as in Example 1 to produce a sintered body.

The sintered bodies of Examples 13 to 33, Comparative examples 3 to 5, and Reference examples 1 to 3 were subjected to composition analysis and measurement of X-ray diffraction peaks in the same manner as in Example 1. The ionic conductivity was measured in the same manner as in Example 1.

· Results

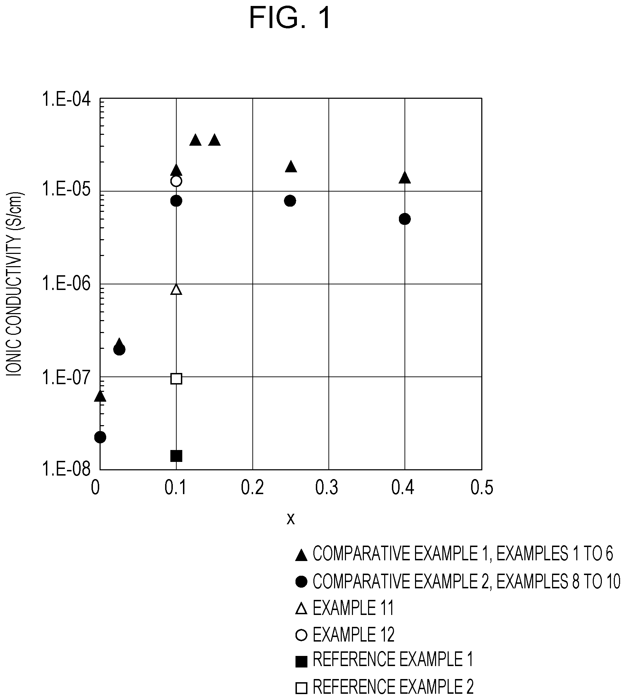

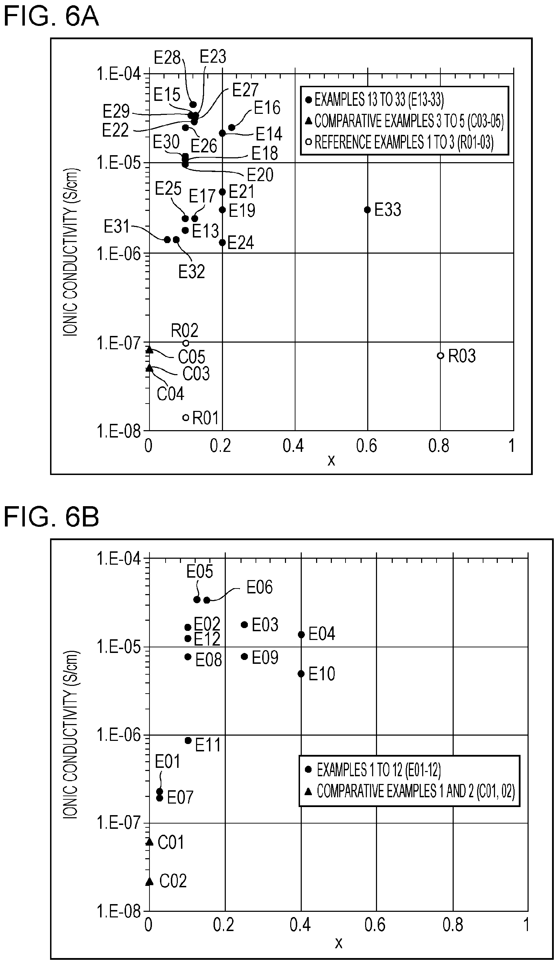

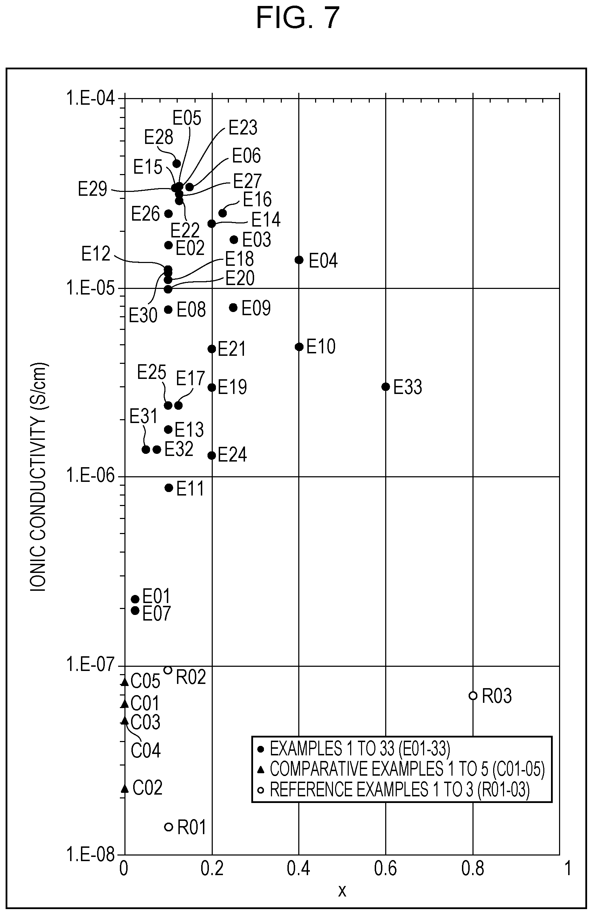

Table 1 presents the stoichiometric amounts of raw materials and the heating temperature during the post baking when the solid electrolytes according to Examples 1 to 12, Comparative examples 1 and 2, and Reference examples 1 and 2 were produced, the diffraction peak positions, and the ionic conductivity. Table 2 presents the stoichiometric amounts of raw materials and the heating temperature during post baking when the solid electrolytes according to Examples 13 to 33, Comparative examples 3 to 5, and Reference example 3 were produced, the diffraction peak positions, and the ionic conductivity. Fig. 6A illustrates the relationship between the ionic conductivity and the value of the composition x (x1 + x2) of the substitution element M of each of the solid electrolytes according to Examples 13 to 33 included in the first embodiment and Comparative examples 3 to 5. Fig. 6B illustrates the relationship between the ionic conductivity and the value of the composition x (x1 + x2) of the substitution element M of each of the solid electrolytes according to Examples 1 to 12 included in the first embodiment, Comparative examples 1 and 2, and Reference examples 1 to 3. Fig. 6B is based on substantially the same measurement data as in Fig. 1, and is created to match the appearance of the graph with Fig. 6A corresponding to Examples 13 to 33. Fig. 7 illustrates the relationship between the ionic conductivity and the value of the composition x (x1 + x2) of the substitution element M of each of the solid electrolytes according to Examples 1 to 33 included in the first embodiment, Comparative examples 1 to 5, and Reference examples 1 to 3. Fig. 7 is based substantially on the measured data of Fig. 6A and the measured data of Fig. 6B.

The results of the above composition analysis indicated that each sintered body (solid electrolyte) had the elements of the raw materials described in Tables 1 and 2. The sintered bodies (solid electrolytes) according to Examples 1 to 33 were each a solid electrolyte that was successfully densified at a low temperature of lower than 700°C and that exhibited high ionic conductivity.

Fig. 1 illustrates the relationship between the ionic conductivity of the solid electrolytes according to Examples 1 to 12 included in the present embodiment and the value of x in the general formula. The value of x in the general formula corresponds to the sum of x1 and x2 given in Table 1.

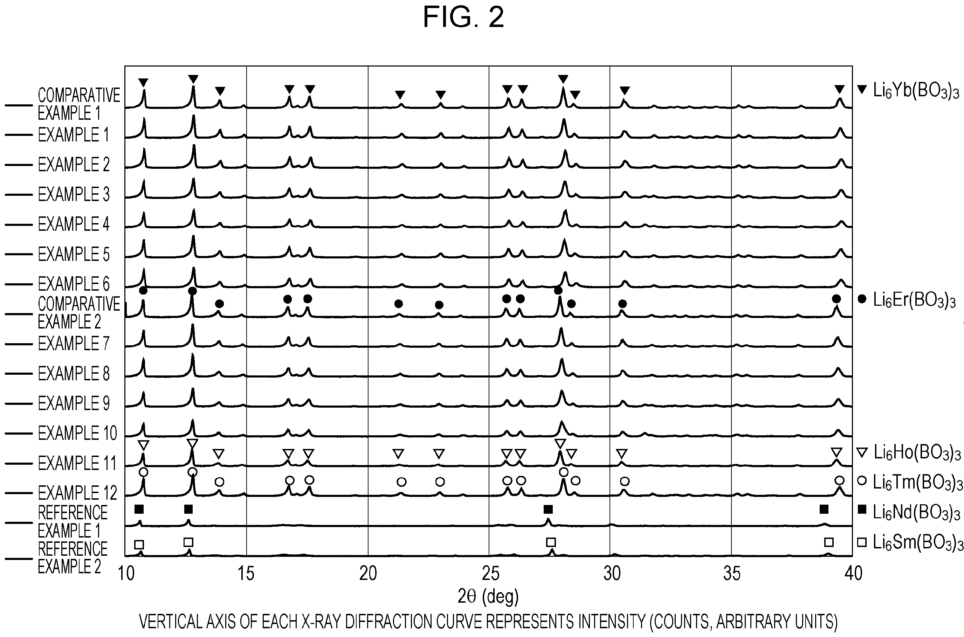

Fig. 2 illustrates diffraction curves obtained by XRD in the range of $2\theta$ = 10° to 40°. It can be seen that the crystal structure in each of Examples 1 to 6 is monoclinic $Li_6Yb(BO_3)_3$, the crystal structure in each of Examples 7 to 10 is monoclinic $Li_6Er(BO_3)_3$, the crystal structure in Example 11 is monoclinic $Li_6Ho(BO_3)_3$, and the crystal structure in Example 12 is monoclinic $Li_6Tm(BO_3)_3$. Similarly, it was confirmed from the XRD measurement that the crystal structure of each of Examples 13 to 33 was a monoclinic crystal structure.

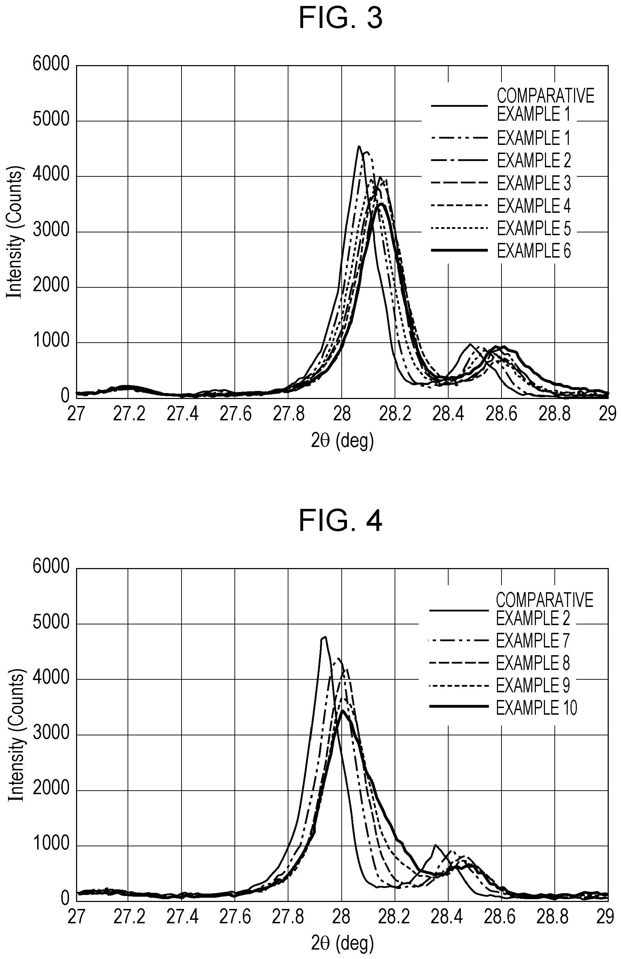

Figs. 3 and 4 illustrate diffraction curves obtained by XRD in the range of $2\theta$ = 27° or more and 29° or less. It can be seen that the peak positions at about $2\theta$ = 28.1° and about 28.5° in Examples 1 to 6 are shifted to higher angles than the peak position in Comparative example 1. The peak positions at about $2\theta$ = 28.0° and about 28.4° in Examples 7 to 10 are shifted to higher angles than the peak position in Comparative Example 2. These are considered to be the changes of the X-ray diffraction profiles corresponding to the changes of the crystal structure caused by the substitution of at least one element selected from the group including M for at least part of Yb and Er, which are rare-earth elements. Similar measurements indicated that the peak positions for Examples 13 to 33 were also shifted to higher angles than the peak positions when x was 0. Similarly, it is considered that the changes of the X-ray diffraction profiles correspond to the changes of the crystal structure caused by the substitution of at least one element selected from the group including M for at least part of the rare-earth element used.

In the solid electrolytes according to Examples 1 to 33 in which the ion conductivity $\sigma$ was $1 \times 10^{-7}$ S/cm or more, as presented in Tables 1 and 2, the peak shift of the bimodal diffraction peaks to higher angles was observed along with the shift of the X-ray diffraction angle peaks to higher angles. That is, it can be read that in the range of 27.4° or more and 29.0° or less, the difference $2\theta d$ in diffraction angle between a higher-angle diffraction peak observed at 28.3° to 29.0° and a lower-angle diffraction peak observed at 27.4° to 28.3° is increased to 0.43° or more. In other words, the solid electrolyte according to the present embodiment contains a borate containing Li, an element R selected from a group including Yb, Er, Ho, Tm, La, Nd, and Sm, and an element M selected from a group including Zr, Ce, and Sn. Furthermore, the solid electrolyte of the present embodiment is, in other words, an electrolyte that exhibits two diffraction peaks in the diffraction angle $2\theta$ range of 27.4° or more and 29.0° or less in XRD using the K-alpha emission line in copper, in which the difference $2\theta d$ in diffraction angle between the higher-angle diffraction peak and the lower-angle diffraction peak is 0.43° or more.

The two diffraction peaks observed in the diffraction angle $2\theta$ range of 27.4° or more and 29.0° or less may further include multimodal peaks including trimodal or tetramodal peaks depending on the crystallinity. In the present specification, the two diffraction peaks are represented as having one peak on the lower angle side and one peak on the higher angle side, respectively, bordering a diffraction angle $2\theta$ of 28.3°. In this way, the diffraction peaks are separated by fitting to a bimodal diffraction profile.

Such high-angle diffraction peaks are broadened and shift to higher angles more remarkably than low-angle diffraction peaks as the component of the substitution element M increases or as the ionic conductivity increases. These results indicate that the solid electrolyte 44 of the present embodiment has a different crystal structure than the non-substituted comparative examples, such that multiple crystal structures having distributions in lattice spacing and crystallite size are mixed.

The solid electrolytes according to Examples 13 to 33 described in Table 2 and Figs. 6A and 7 are different from the solid electrolytes according to Examples 1 to 12 in that the rare-earth elements R are binary: (Yb, Tm), (Yb, Nd), (Yb, Er), (Yb, Sm), (Yb, La), and (Er, La).

The solid electrolytes of Examples 14 to 16, 18, 22, 23, and 26 to 33 exhibit an ionic conductivity of 1E-5 (S/cm) or more as in Examples 2 to 6 and 12, and can be used for the anodes of all-solid-state batteries by being combined with anode active material particles, such as LCO, to form a composite structure.

In the solid electrolytes having an ionic conductivity of 1E-7 (S/cm) or more according to Examples 1 to 33, the atomic concentration ratio [M]/[R] of the substitution element M to the rare-earth element R was 0.026 or more and 1.500 or less. In the solid electrolytes having an ionic conductivity of 1E-6 (S/cm) or more according to Examples 2 to 6, 8 to 10, and 12 to 33, the atomic concentration ratio [M]/[R] of the substitution element M to the rare-earth element R was 0.056 or more and 1.500 or less. In the solid electrolytes having an ionic conductivity of 2E-5 (S/cm) or more according to Examples 2 to 6, 12, 14 to 16, 18, 22, 23, 26 to 30, and 32, the atomic concentration ratio [M]/[R] of the substitution element M to the rare-earth element R was 0.081 or more and 0.667 or less.

Among the solid electrolytes containing multiple rare-earth elements according to Examples 13 to 33, the solid electrolytes having an ionic conductivity of 1E-5 (S/cm) or more had an atomic concentration ratio ([R] - [Yb])/[R] of 0.063 or more and 0.200 or less.

The atomic concentration ratio [M]/[R] of the substitution element M to the rare-earth element R is algebraically described as [M]/[R] = (x1 + x2)/(R1 ratio + R2 ratio) using the R1 ratio, the R2 ratio, x1, and x2 described in Table 2. Similarly, the atomic concentration ratio [M]/[R] of the substitution element M to the rare-earth element R is algebraically described as [M]/[R] = (x1 + x2)/(1 - x1 - x2) using x1 and x2 described in Table 1.

The atomic concentration ratio ([R] - [Yb])/[R] is algebraically described as (R2 ratio)/(R1 ratio + R2 ratio) using the R1 ratio and the R2 ratio described in Table 2.

In Tables 1 and 2, the atomic concentration ratio [M]/[R] of the substitution element M is described as the atomic concentration ratio [M1]/[R] of the substitution element M1.

[Table 1]

EP 4 300 618 A1

**TABLE 1**

|  | R | M1 | | ×1 | ×2 | Sintering temperature (°C) | Diffraction peak (°) | Difference in diffraction angle (°) | Ionic conductivity (S/cm) | [M1]/[R] |
|---|---|---|---|---|---|---|---|---|---|---|
| Comparative example 1 | Yb | - | - | 0.000 | 0.000 | 670 | 28.065 28.486 | 0.421 | $6.3 \times 10^{-8}$ | 0.000 |
| Example 1 | Yb | Zr | - | 0.025 | 0.000 | 670 | 28.094 28.529 | 0.435 | $2.2 \times 10^{-7}$ | 0.026 |
| Example 2 | Yb | Zr | - | 0.100 | 0.000 | 670 | 28.148 28.594 | 0.446 | $1.6 \times 10^{-5}$ | 0.111 |
| Example 3 | Yb | Zr | - | 0.250 | 0.000 | 670 | 28.130 28.586 | 0.456 | $1.8 \times 10^{-5}$ | 0.333 |
| Example 4 | Yb | Zr | - | 0.400 | 0.000 | 670 | 28.144 28.605 | 0.461 | $1.4 \times 10^{-5}$ | 0.667 |
| Example 5 | Yb | Zr | Ce | 0.100 | 0.025 | 670 | 28.111 28.550 | 0.439 | $3.4 \times 10^{-5}$ | 0.143 |
| Example 6 | Yb | Zr | Ce | 0.100 | 0.050 | 670 | 28.144 28.602 | 0.458 | $3.4 \times 10^{-5}$ | 0.176 |
| Comparative example 2 | Er | - | - | 0.000 | 0.000 | 670 | 27.935 28.420 | 0.426 | $2.2 \times 10^{-8}$ | 0.000 |
| Example 7 | Er | Zr | - | 0.250 | 0.000 | 670 | 27.980 28.420 | 0.440 | $1.9 \times 10^{-7}$ | 0.026 |
| Example 8 | Er | Zr | - | 0.100 | 0.000 | 670 | 28.011 28.457 | 0.449 | $7.7 \times 10^{-6}$ | 0.1111111 |
| Example 9 | Er | Zr | - | 0.250 | 0.000 | 670 | 28.011 28.465 | 0.454 | $7.8 \times 10^{-6}$ | 0.333 |
| Example 10 | Er | Zr | - | 0.400 | 0.000 | 670 | 28.011 28.454 | 0.443 | $4.9 \times 10^{-6}$ | 0.667 |
| Example 11 | Ho | Zr | - | 0.100 | 0.000 | 670 | 27.939 28.388 | 0.449 | $8.7 \times 10^{-7}$ | 0.111 |

(continued)

| | R | M1 | | ×1 | ×2 | Sintering temperature (°C) | Diffraction peak (°) | Difference in diffraction angle (°) | Ionic conductivity (S/cm) | [M1]/[R] |
|---|---|---|---|---|---|---|---|---|---|---|
| Example 12 | Tm | Zr | - | 0.100 | 0.000 | 670 | 28.070 / 28.519 | 0.449 | $1.2 \times 10^{-5}$ | 0.111 |
| Reference example 1 | Nd | Zr | - | 0.100 | 0.000 | 670 | 27.477 / 27.870 | 0.423 | $1.4 \times 10^{-8}$ | 0.111 |
| Reference example 2 | Sm | Zr | - | 0.100 | 0.000 | 670 | 27.601 / 28.075 | 0.474 | $9.5 \times 10^{-8}$ | 0.111 |

[Table 2]

TABLE 2

| | R1 | R2 | R1 ratio | R2 ratio | M1 | | x1 | x2 | Sintering temperature (°) | Diffraction peak (°) | Difference in diffraction angle (°) | Ionic conductivity (S/cm) | [M1]/ [R] | ([R]-[Yb]) /[R] |
|---|---|---|---|---|---|---|---|---|---|---|---|---|---|---|
| Comparative example 3 | Yb | Tm | 0.8 | 0.2 | - | - | 0 | 0 | 670 | 28.064 28.496 | 0.432 | $5.1 \times 10^{-8}$ | 0.000 | 0.200 |
| Example 13 | Yb | Tm | 0.72 | 0.18 | Zr | - | 0.100 | 0 | 670 | 28.096 28.544 | 0.448 | $1.8 \times 10^{-6}$ | 0.111 | 0.200 |
| Example 14 | Yb | Tm | 0.64 | 0.16 | Zr | - | 0.200 | 0 | 670 | 28.128 28.560 | 0.448 | $2.2 \times 10^{-5}$ | 0.250 | 0.200 |
| Example 15 | Yb | Tm | 0.7 | 0.175 | Zr | Ce | 0.100 | 0.025 | 670 | 28.128 28.576 | 0.448 | $3.4 \times 10^{-5}$ | 0.143 | 0.200 |
| Example 16 | Yb | Tm | 0.62 | 0.155 | Zr | Ce | 0.200 | 0.025 | 670 | 28.160 28.592 | 0.432 | $2.5 \times 10^{-5}$ | 0.290 | 0.200 |
| Example 17 | Yb | Tm | 0.7875 | 0.0875 | Zr | Ce | 0.100 | 0.025 | 670 | 28.112 28.544 | 0.432 | $2.4 \times 10^{-6}$ | 0.143 | 0.100 |
| Comparative example 4 | Yb | Nd | 0.9 | 0.1 | - | - | 0 | 0 | 670 | 27.824 28.256 | 0.432 | $5.1 \times 10^{-8}$ | 0 | 0.100 |
| Example 18 | Yb | Nd | 0.72 | 0.18 | Zr | - | 0.100 | 0 | 670 | 28.016 28.480 | 0.464 | $1.1 \times 10^{-5}$ | 0.111 | 0.200 |
| Example 19 | Yb | Nd | 0.64 | 0.16 | Zr | - | 0.200 | 0 | 670 | 28.032 28.464 | 0.432 | $3.0 \times 10^{-6}$ | 0.250 | 0.200 |
| Example 20 | Yb | Nd | 0.81 | 0.09 | Zr | - | 0.100 | 0 | 670 | 28.096 28.528 | 0.432 | $9.8 \times 10^{-6}$ | 0.111 | 0.1 |
| Example 21 | Yb | Nd | 0.72 | 0.08 | Zr | - | 0.200 | 0 | 670 | 28.112 28.544 | 0.432 | $4.8 \times 10^{-6}$ | 0.250 | 0.100 |
| Example 22 | Yb | Nd | 0.7875 | 0.0875 | Zr | Ce | 0.100 | 0.025 | 670 | 28.096 28.528 | 0.432 | $2.9 \times 10^{-5}$ | 0.143 | 0.100 |
| Example 23 | Yb | Nd | 0.7 | 0.175 | Zr | Ce | 0.100 | 0.025 | 670 | 28.160 28.592 | 0.432 | $3.3 \times 10^{-5}$ | 0.143 | 0.200 |

| | R1 | R2 | R1 ratio | R2 ratio | M1 | | x1 | x2 | Sintering temperature (°) | Diffraction peak (°) | Difference in diffraction angle (°) | Ionic conductivity (S/cm) | [M1]/ [R] | ([R]-[Yb]) /[R] |
|---|---|---|---|---|---|---|---|---|---|---|---|---|---|---|
| Example 24 | Yb | Er | 0.64 | 0.16 | Zr | - | 0.200 | 0 | 670 | 28.064 28.528 | 0.464 | $1.3 \times 10^{-6}$ | 0.250 | 0.200 |
| Example 25 | Yb | Sm | 0.81 | 0.19 | Zr | - | 0.100 | 0 | 670 | 28.096 28.544 | 0.448 | $2.4 \times 10^{-6}$ | 0.111 | 0.100 |
| Comparative example 5 | Yb | La | 0.9 | 0.1 | - | - | 0 | 0 | 670 | 28.048 28.464 | 0.416 | $8.2 \times 10^{-9}$ | 0 | 0.100 |
| Example 26 | Yb | La | 0.81 | 0.09 | Zr | - | 0.100 | 0 | 670 | 28.128 28.576 | 0.448 | $2.5 \times 10^{-5}$ | 0.111 | 0.100 |
| Example 27 | Yb | La | 0.7875 | 0.0875 | Zr | Ce | 0.100 | 0.025 | 670 | 28.096 28.544 | 0.448 | $3.2 \times 10^{-5}$ | 0.143 | 0.100 |
| Example 28 | Yb | La | 0.785 | 0.095 | Zr | Ce | 0.085 | 0.035 | 670 | 28.096 28.528 | 0.432 | $4.6 \times 10^{-5}$ | 0.136 | 0.108 |
| Example 29 | Yb | La | 0.8268 | 0.0556 | Zr | Ce | 0.117 | 0.0006 | 670 | 28.128 28.592 | 0.464 | $3.4 \times 10^{-5}$ | 0.133 | 0.063 |
| Example 30 | Er | La | 0.81 | 0.09 | Zr | - | 0.100 | 0 | 670 | 28.000 28.432 | 0.432 | $1.2 \times 10^{-5}$ | 0.111 | 0.100 |
| Example 31 | Yb | - | 0.9 | 0.000 | Zr | - | 0.050 | 0 | 670 | 28.108 28.544 | 0.436 | $1.4 \times 10^{-6}$ | 0.056 | 0 |
| Example 32 | Yb | - | 0.925 | 0.000 | Zr | - | 0.075 | 0 | 670 | 28.108 28.544 | 0.436 | $1.4 \times 10^{-6}$ | 0.081 | 0 |
| Example 33 | Yb | - | 0.4 | 0.000 | Zr | - | 0.600 | 0 | 670 | 28.144 28.608 | 0.464 | $3.0 \times 10^{-6}$ | 1.500 | 0 |
| Reference example 3 | Yb | - | 0.2 | 0.000 | Zr | - | 0.800 | 0 | 670 | 28.144 28.608 | 0.432 | $6.9 \times 10^{-8}$ | 4.000 | 0 |

The present invention is not limited to the above embodiments and various changes and modifications can be made within the spirit and scope of the present invention. Therefore, to apprise the public of the scope of the present invention, the following claims are made.

This application claims priority based on Japanese Patent Application No. 2021-028807 filed on February 25, 2021, Japanese Patent Application No. 2021-101742 filed on June 18, 2021, Japanese Patent Application No. 2022-007354 filed on January 20, 2022, which are hereby incorporated by reference herein in their entirety.

**Claims**

1. A solid electrolyte, comprising an oxide represented by the general formula $Li_{6-x}R_{1-x}M1_x(BO_3)_3$,
   where in the formula, R is a trivalent element selected from a group including Yb, Er, Ho, and Tm, M1 is a tetravalent element selected from a group including Zr, Ce, and Sn, and x is a real number satisfying $0 < x < 1$.

2. The solid electrolyte according to Claim 1, wherein the solid electrolyte exhibits two diffraction peaks in a range of $2\theta = 27.4°$ or more and $29.0°$ or less in an X-ray diffraction analysis using a K-alpha emission line in copper, and a difference $2\theta d$ in diffraction angle between a higher-angle diffraction peak and a lower-angle diffraction peak is $0.43°$ or more.

3. The solid electrolyte according to Claim 1, wherein R is Yb, and the solid electrolyte exhibits a diffraction peak in a range of $2\theta = 28.07°$ or more and $28.20°$ or less in an X-ray diffraction analysis using a K-alpha emission line in copper.

4. The solid electrolyte according to any one of Claims 1 to 3, wherein R is Yb, M1 is Zr, and x satisfies $0 < x < 1$.

5. The solid electrolyte according to Claim 1, wherein R is Er, and the solid electrolyte exhibits a diffraction peak in a range of $2\theta = 27.94°$ or more and $28.10°$ or less in an X-ray diffraction analysis using a K-alpha emission line in copper.

6. The solid electrolyte according to any one of Claims 1, 2, and 5, wherein R is Er, M1 is Zr, and x satisfies $0 < x < 1$.

7. An anode according to any one of Claims 1 to 6, comprising the solid electrolyte, an anode active material configured to accept or release lithium ions to or from the electrolyte, and a surface where the solid electrolyte and the active material are arranged.

8. A secondary battery, comprising:

   the anode according to Claim 7;
   an electrolyte layer configured to be disposed in contact with the surface and configured to accept or release lithium ions to or from the anode; and
   a cathode in contact with an opposite surface of the electrolyte layer from a side of the electrolyte layer in contact with the surface.

9. An electrolyte layer according to any one of Claims 1 to 6, comprising a surface where the solid electrolyte is arranged.

10. A secondary battery, comprising the electrolyte layer according to Claim 9, an anode configured to be disposed in contact with the surface and so as to accept or release lithium ions to or from the electrolyte layer, and a cathode in contact with an opposite surface of the electrolyte layer from the surface.

11. A solid electrolyte, comprising a borate containing Li, an element R selected from a group including Yb, Er, Ho, Tm, La, Nd, and Sm, and
    an element M selected from a group including Zr, Ce, and Sn.

12. The solid electrolyte according to Claim 11, wherein an atomic concentration ratio [M]/[R] of the element M to the element R is 0.026 or more and 1.500 or less.

13. The solid electrolyte according to Claim 12, wherein the atomic concentration ratio [M]/[R] is 0.111 or more and 0.290 or less.

14. A solid electrolyte, comprising a borate containing Li, an element R selected from a group including Yb, Er, Ho, Tm, La, Nd, and Sm, and
an element M selected from a group including Zr, Ce, and Sn, wherein the solid electrolyte exhibits two diffraction peaks in a diffraction angle 2θ range of 27.4° or more and 29.0° or less in an X-ray diffraction analysis using a K-alpha emission line in copper, and a difference 2θd in diffraction angle between a higher-angle diffraction peak and a lower-angle diffraction peak is 0.43° or more.

15. A solid electrolyte, comprising an oxide represented by the general formula $Li_{6-x}R_{1-x}M_x(BO_3)_3$,
where in the formula, R is a rare-earth element selected from a group including Yb, Er, Ho, Tm, La, Nd, and Sm, M is an element selected from a group including Zr, Ce, and Sn, and x is a real number satisfying $0 < x < 1$.

16. The solid electrolyte according to Claim 14 or 15,
wherein the solid electrolyte exhibits two diffraction peaks in a diffraction angle 2θ range of 27.4° or more and 29.0° or less in an X-ray diffraction analysis using a K-alpha emission line in copper, and a difference 2θd in diffraction angle between a higher-angle diffraction peak and a lower-angle diffraction peak is 0.43° or more.

17. The solid electrolyte according to any one of Claims 11 to 16, wherein the element M contains Zr.

18. The solid electrolyte according to Claim 17, wherein the element M further contains Ce.

19. The solid electrolyte according to any one of Claims 11 to 18, wherein the element R contains multiple rare-earth elements.

20. The solid electrolyte according to Claim 19, wherein the multiple rare-earth elements contains at least Yb.

21. The solid electrolyte according to Claim 20, wherein an atomic concentration ratio, ([R] - [Yb])/[R], of elements, excluding Yb, contained in the element R to the rare-earth elements R is 0.063 or more and 0.200 or less.

22. The solid electrolyte according to any one of Claims 11 to 21, wherein the element R contains Yb, and the solid electrolyte exhibits a diffraction peak in a diffraction angle 2θ range of 28.07° or more and 28.20° or less in an X-ray diffraction analysis using a K-alpha emission line in copper.

23. The solid electrolyte according to Claim 15, wherein R contains Yb, M contains Zr, and x satisfies $0 < x < 1$.

24. The solid electrolyte according to Claim 15, wherein R contains Er, and the solid electrolyte exhibits a diffraction peak in a diffraction angle 2θ range of 27.94° or more and 28.10° or less in an X-ray diffraction analysis using a K-alpha emission line in copper.

25. The solid electrolyte according to Claim 15, wherein R contains Er, M contains Zr, and x satisfies $0 < x < 1$.

26. An anode, comprising the solid electrolyte according to any one of Claims 11 to 25, and an anode active material configured to accept or release lithium ions to or from the solid electrolyte.

27. The anode according to Claim 26, wherein the anode has a surface where the solid electrolyte and the anode active material are arranged.

28. A secondary battery, comprising:

the anode according to Claim 27;
an electrolyte layer configured to be disposed in contact with the surface and configured to accept or release lithium ions to or from the anode; and
a cathode in contact with an opposite surface of the electrolyte layer from a side on which the electrolyte layer is in contact with the surface.

29. An electrolyte layer, comprising a surface where the solid electrolyte according to any one of Claims 11 to 28 is arranged.

30. A secondary battery, comprising the electrolyte layer according to Claim 29, an anode configured to be disposed in contact with the surface and so as to accept or release lithium ions to or from the electrolyte layer, and a cathode in contact with an opposite surface of the electrolyte layer from the surface.

# FIG. 1

COMPARATIVE EXAMPLE 1, EXAMPLES 1 TO 6
COMPARATIVE EXAMPLE 2, EXAMPLES 8 TO 10
EXAMPLE 11
EXAMPLE 12
REFERENCE EXAMPLE 1
REFERENCE EXAMPLE 2

# FIG. 2

VERTICAL AXIS OF EACH X-RAY DIFFRACTION CURVE REPRESENTS INTENSITY (COUNTS, ARBITRARY UNITS)

# FIG. 3

# FIG. 4

## FIG. 5A

## FIG. 5B

FIG. 6A

FIG. 6B

# FIG. 7

## INTERNATIONAL SEARCH REPORT

| International application No. |
| --- |
| **PCT/JP2022/007439** |

### A. CLASSIFICATION OF SUBJECT MATTER

*H01M 4/13*(2010.01)i; *H01M 4/62*(2006.01)i; *H01B 1/06*(2006.01)i; *H01B 1/08*(2006.01)i; *H01M 10/052*(2010.01)i; *H01M 10/0562*(2010.01)i; *H01M 10/058*(2010.01)i; *H01M 10/0585*(2010.01)i
FI: H01B1/06 A; H01M10/0562; H01M10/058; H01M10/052; H01M4/62 Z; H01M4/13; H01M10/0585; H01B1/08

According to International Patent Classification (IPC) or to both national classification and IPC

### B. FIELDS SEARCHED

Minimum documentation searched (classification system followed by classification symbols)

H01M4/13; H01M4/62; H01M10/052; H01M10/0562; H01M10/058; H01M10/0585; H01B1/06; H01B1/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-204215 A (SUMITOMO METAL MINING CO., LTD.) 16 November 2015 (2015-11-16)<br>claims | 1-30 |
| P, A | JP 6947321 B1 (TDK CORP.) 13 October 2021 (2021-10-13)<br>claims | 1-30 |
| P, A | WO 2021/124812 A1 (CANON OPTRON, INC.) 24 June 2021 (2021-06-24)<br>claims | 1-30 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT

Information on patent family members

International application No.

**PCT/JP2022/007439**

| Patent document cited in search report | | | Publication date (day/month/year) | Patent family member(s) | | | Publication date (day/month/year) |
|---|---|---|---|---|---|---|---|
| JP | 2015-204215 | A | 16 November 2015 | (Family: none) | | | |
| JP | 6947321 | B1 | 13 October 2021 | (Family: none) | | | |
| WO | 2021/124812 | A1 | 24 June 2021 | JP | 2021-099983 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5054712 A
- JP 2013037992 A
- JP 2021028807 A
- JP 2021101742 A
- JP 2022007354 A